# EUROPÄISCHE PATENTANMELDUNG

(11) **EP 0 996 275 A2**
(43) Veröffentlichungstag der Anmeldung: **26.04.2000**
(21) Anmeldenummer: 99119554.6
(22) Anmeldetag: 01.10.1999
(51) Int. Cl.: H04M 15/00, H04M 1/274

(54) **Kommunikationsagenteneinheit zum Auswählen von günstigsten Kommunikationsbedingungen**

(30) Priorität: 23.10.1998 DE 19848998
(71) Anmelder: SIEMENS AKTIENGESELLSCHAFT, 80333 München (DE)
(72) Erfinder: Remmele, Werner, 86415 Mering (DE); Schmiedel, Gabriele, 83627 Warngau (DE)

(57) **Zusammenfassung**

Beschrieben wird eine Kommunikationsagenteneinheit (KAE) mit Zugriffsmöglichkeit auf ein Gebührenberechnungsmodul (CHARGE) und auf ein Uhrzeitmodul (TD). Die Kommunikationsagenteneinheit (KAE) hat eine Prozessorsteuerung (CPU), die das Kommunikationsverhalten eines Teilnehmers beobachtet und Regelmäßigkeiten durch Vergleichen von Kommunikationsparametern dieses Teilnehmers erfaßt. Die Prozessorsteuerung (CPU) wählt bei einem aktuellen Kommunikationsereignis unter mehreren Diensteanbietern den günstigsten Diensteanbieter abhängig von gebührenrelevanten Kommunikationsparametern aus, wobei angenommen ist, daß das regelmäßige Kommunikationsverhalten auch beim aktuellen Kommunikationsereignis beibehalten wird.

## Beschreibung

Einfache Kommunikationsagenteneinheiten zum Auswählen des jeweils günstigsten Kommunikationsdiensteanbieters sind unter anderem unter dem Namen "Call Manager" und "Call Captain" bekannt und im Internet unter der Adresse http://www.CallManage.com/ mit den Untertiteln about.html, howitworks.html und faq.html beschrieben. Eine solche Kommunikationsagenteneinheit ist durch einen Personal Computer (PC) mit einer Navigationssoftware und einem Gebührenberechnungssoftwaremodul sowie einem Uhrzeitmodul realisiert und zwischen die Kommunikationseinrichtung des Benutzers und ein Kommunikationsnetz geschaltet. Die Kommunikationsagenteneinheit wählt abhängig von der vom Benutzer eingegebenen Netzadresse, z.B. der E.164-Netzadresse, eines gewünschten Kommunikationspartners unter Berücksichtigung der Gebührenstruktur mehrerer Diensteanbieter den günstigsten Diensteanbieter aus und veranlaßt einen Verbindungsaufbau unter Nutzung dieses günstigsten Diensteanbieters.

Insbesondere in privaten Nebenstellenanlagen und Firmennetzen sind sogenannte "Least-Cost-Routing-Einrichtungen" zum Routing von Verbindungen, d.h. zum Festlegen der Streckenführung, und hierzu gegebenenfalls zum Auswählen eines Diensteanbieters, bekannt. Solche Least-Cost-Routing-Einrichtungen wählen abhängig von der Netzadresse, z.B. der E.164-Netzadresse, eines gerufenen Teilnehmers beispielsweise den Netzübergang von einem Firmennetz in ein öffentliches Netz nach Kostengesichtspunkten aus. Hierbei wird in vielen Fällen die Kommunikationswegführung innerhalb des Firmennetzes möglichst für lange Strecken bzw. für kostenintensive, ggf. internationale Netzübergänge verwendet, so daß die an einen externen Kommunikationsdiensteanbieter zu zahlende Gebühr möglichst gering wird. Falls ein Kommunikationsnetz bzw. eine private Nebenstellenanlage, die eine solche Least-Cost-Routing-Einrichtung enthält, an mehrere Kommunikationsnetze, beispielsweise an Mobilfunknetze unterschiedlicher Netzanbieter sowie an ein ISDN-Netz angeschlossen ist, wählt die Least-Cost-Routing-Einrichtung abhängig von der Rufnummer eines zu rufenden Kommunikationspartners auch das Kommunikationsnetz und somit die Kommunikationsart bzw. den Diensteanbieter aus, über das ein abgehender Ruf geführt werden soll. Lassen beispielsweise die Anfangsziffern eines gerufenen Kommunikationspartners erkennen, daß das gerufene Endgerät dieses Kommunikationspartners ein Mobilfunknetz eines Mobilfunknetzbetreibers ist, zu dem die private Nebenstellenanlage bzw. das Firmennetz unmittelbaren Zugang haben, so wird der abgehende Ruf über dieses Netz geführt, und es wird eine gebührengünstige, mobilfunknetzinterne Verbindung aufgebaut. In diesem Fall ist die gewählte Kommunikationsart Mobilfunkübertragung und, falls der Diensteanbieter des gewählten Mobilfunknetzes von dem Diensteanbieter eines Festnetzes abweicht, ist auch ein Diensteanbieter ausgewählt.

Andere wählbare Kommunikationsarten sind zum Beispiel Telefonie über ISDN, Telefonie über IP-Netze (IP = Internet Protokoll), Telefonie über das Analogsignal-Netz oder 7-kHz-Telefonie. Außerdem kann zum Beispiel zwischen Halbraten- und Vollraten-Mobilfunk gewählt werden.

Die beschriebenen bekannten Kommunikationsagenteneinheiten haben gemeinsam, daß sie vom Benutzer unabhängige Kommunikationsparameter oder den Ort eines Netzüberganges festlegen. Das übliche Kommunikationsverhalten des Benutzers, also des Teilnehmers, dem die Kommunikationsagenteneinheit jeweils zugeordnet ist, wird in keiner Weise berücksichtigt.

Aufgabe der vorliegenden Erfindung ist es, eine Kommunikationsagenteneinheit zum Auswählen von günstigsten Kommunikationsbedingungen bereitzustellen, die das spezifische Kommunikationsverhalten des Benutzers berücksichtigt.

Diese Aufgabe löst die Erfindung durch eine Kommunikationsagenteneinheit, deren Prozessorsteuerung das Kommunikationsverhalten eines Teilnehmers, dem die Kommunikationsagenteneinheit zugeordnet ist, auf Regelmäßigkeiten beobachtet. Dies wird durch Vergleichen der von der Kommunikationsagenteneinheit erfaßbaren, zu verschiedenen Zeitpunkten beobachteten Kommunikationsparametern von Rufen erreicht, die dieser Teilnehmer durchführt. Außerdem ermittelt die Prozessorsteuerung, ob eine solche Regelmäßigkeit bei durch das Kommunikationsverhalten des Teilnehmers festgelegten gebührenrelevanten Kommunikationsparametern festgestellt worden ist. Sofern bei diesem Beobachten eine Regelmäßigkeit bei gebührenrelevanten Kommunikationsparametern festgestellt worden ist, wählt die Prozessorsteuerung den erwartungsgemäß günstigsten Diensteanbieter abhängig von den zu einem früheren Zeitpunkt erfaßten und durch das Kommunikationsverhalten des Teilnehmers festgelegten gebührenrelevanten Kommunikationsparametern aus.

Eine andere Ausbildung einer erfindungsgemäßen Kommunikationsagenteneinheit hat eine Prozessorsteuerung, die, sofern sie beim Beobachten von von diesem Teilnehmer zu verschiedenen Zeitpunkten durchgeführten Rufen eine Regelmäßigkeit bei den durch das Kommunikationsverhalten des Teilnehmers festgelegten gebührenrelevanten Kommunikationsparametern festgestellt hat, die erwartungsgemäß günstigste Kommunikationsart abhängig von den zu einem früheren Zeitpunkt erfaßten und durch das Kommunikationsverhalten des Teilnehmers festgelegten gebührenrelevanten Kommunikationsparametern auswählt.

Eine erfindungsgemäße Kommunikationsagenteneinheit hat neben den vorstehend bereits beschriebenen Steuerfunktionen auch eine Zugriffsmöglichkeit auf ein Gebührenberechnungsmodul und außerdem auf ein Uhrzeitmodul. Ein solches Gebührenberechnungsmodul und ein solches Uhrzeitmodul müssen hierbei nicht zwangsläufig Teil der Kommunikationsagenteneinheit sein. Es genügt, wenn die Kommunikationsagenteneinheit mit Hilfe solcher Module die genaue Zeit bzw. die Ergebnisse von Gebührenberechnungsvorgängen erfassen kann und gegebenenfalls solche Gebührenberechnungsvorgänge veranlassen kann.

Das Uhrzeitmodul enthält in einer anderen Ausgestaltungsform einer Kommunikationsagenteneinheit auch ein Kalendermodul, das neben dem Berücksichtigen der Uhrzeit auch das Berücksichtigen von Zeiträumen beim Feststellen gebührenrelevanter Regelmäßigkeiten ermöglicht.

Eine Kommunikationsagenteneinheit ist im allgemeinen einem Teilnehmer fest zugeordnet. Dies kann beispielsweise bedeuten, daß eine einzige aus Hardware und Software bestehende Kommunikationsagenteneinheit nur einem Teilnehmer zur Verfügung steht. Eine solche Kommunikationsagenteneinheit kann eine selbständige Einheit darstellen, die bedarfsweise an ein Kommunikationsendgerät eines Teilnehmers anschließbar ist. Sie kann aber auch Teil eines Kommunikationsendgerätes eines Teilnehmers sein.

Eine Ausgestaltungsform einer Kommunikationsagenteneinheit kann vorsehen, daß ein Teilnehmer von mehreren, ihm zugeordneten Endgeräten aus auf dieselbe Kommunikationsagenteneinheit zugreifen kann, daß also eine Kommunikationsagenteneinheit mehreren Endgeräten eines Teilnehmers zugeordnet ist. Wenn eine Kommunikationsagenteneinheit mehreren Endgeräten eines Teilnehmers zur Verfügung steht, so kann dies jeweils durch räumliche Anordnung dieser Kommunikationsagenteneinheit an unterschiedlichen Endgeräten des Teilnehmers geschehen. Es ist aber auch ein Zugriff von Endgeräten über ein Kommunikationsnetz bzw. Datennetz auf eine Kommunikationsagenteneinheit des Teilnehmers möglich.

Eine andere Realisierungsform einer Kommunikationsagenteneinheit sieht vor, daß eine einzige Hardwareanordnung zum Realisieren mehrerer, unterschiedlichen Teilnehmern zugeordneten Kommunikationsagenteneinheiten vorgesehen ist. Eine solche Kommunikationsagenteneinheit kann beispielsweise als zentrale Einrichtung innerhalb eines Bereiches eines Kommunikationsnetzes oder Datennetzes vorgesehen sein und mehreren oder allen Teilnehmern bzw. Endgeräten in diesem Bereich des Kommunikations- bzw. Datennetzes zugeordnet sein. Hierbei ist zumindest ein ggf. vorgesehenes KommunikationspartnerVerzeichnismodul sowie eine Datenbasis jedem Teilnehmer mit einer Kommunikationsagenteneinheit individuell zuordnet, wobei in der Datenbasis Kommunikationsparameter gespeichert sind, die zum Erkennen von Regelmäßigkeiten im Kommunikationsverhalten herangezogen werden.

Einzelne Softwaremodule können ebenfalls gemeinsam nutzbar sein. In einem solchen Fall wird beispielsweise beim Einrichten einer Kommunikationsagenteneinheit für einen Teilnehmer oder beim Aktivieren einer Kommunikationsagenteneinheit für einen Teilnehmer eine Programminstanz eines gemeinsamen Programms bzw. einer gemeinsamen Anzahl von Programmodulen instanziiert, wobei diese Programminstanz gemeinsam mit der Hardware eine diesem Teilnehmer zugeordnete Kommunikationsagenteneinheit darstellt. Informationsressourcen, auf die eine Kommunikationsagenteneinheit zugreift, wie zum Beispiel ein Gebührenberechnungsmodul, ein Uhrzeitmodul und ein Kommunikationspartner-Verzeichnismodul können, unabhängig von der Realisierungsart einer Kommunikationsagenteneinheit, zentral in einem Kommunikationsnetz bzw. Datennetz realisiert werden, so daß Kommunikationsagenteneinheiten jeweils auf diese zentralen Informationsressourcen zugreifen können.

Zu den von der Kommunikationsagenteneinheit erfaßbaren Kommunikationsparametern kann beispielsweise mindestens ein Teil der Adresse eines gerufenen Teilnehmers bzw. die gesamte Adresse des gerufenen Teilnehmers gehören sowie der Zeitpunkt des Beginns eines abgehenden Rufes und/oder die Dauer eines abgehenden Rufes. Außerdem kann die vom rufenden Teilnehmer gewählte Verbindungsqualität, wie zum Beispiel Standbild oder Bewegtbild bei Bildtelefonie, 7 kHz- oder 3 kHz-Telefonie, oder eine gegebenenfalls niedrige, derzeit z.B. mit Hilfe von Telefonie-über-Internetprotokoll erreichbare Qualität, ein solcher von der Kommunikationsagenteneinheit erfaßbarer Kommunikationsparameter sein. Die Qualität einer Telefonie-über-Internetprotokoll-Verbindung ist hierbei zur Zeit insbesondere bezüglich der Zuverlässigkeit der Verbindung im allgemeinen geringer als die einer Telefonwählnetzverbindung.

Die vom Teilnehmer, dem eine erfindungsgemäße Kommunikationsagenteneinheit zugeordnet ist, festlegbaren Kommunikationsparameter können beispielsweise sein:
Der Kommunikationstyp, wie zum Beispiel Bewegtbild mit Audio, Standbild mit Audio, E-Mail oder eine reine Audioverbindung beziehungsweise Faxverbindung;
der durch Adreßauswahl festlegbare Endgerätetyp des gerufenen Kommunikationspartners, wie zum Beispiel Mobilfunktelefon, Telefonnetzendgerät oder Internetprotokollnetzendgerät;
der Zeitpunkt des Beginns, die Dauer oder der Zeitpunkt des Beendens einer Verbindung;
die gewünschte, durch die Art der Verbindung festgelegte Kommunikationsart wie zum Beispiel PSTN- oder ISDN-Wählnetzverbindung, Telefonie-über-Internetprotokoll-LAN-Verbindung;
die Dienstequalität wie z.B. die gewünschte Audio-Bandbreite, das gewünschte Sprach-Codec, die gewünschte Bildwechselhäufigkeit bei langsam bewegtem Video; außerdem ein unter bestimmten Randbedingungen vom Teilnehmer gewählter Diensteanbieter.

Es gibt Kommunikationsarten, die bei länger andauernden Kommunikationsverbindungen ab dem Überschreiten einer bestimmten Verbindungsdauer eine kostengünstigere Kommunikation ermöglichen als andere Kommunikationsarten. Außerdem gibt es Diensteanbieter, die für länger andauernde Verbindungen ab dem Überschreiten einer bestimmten Verbindungsdauer günstigere Bedingungen anbieten als andere Diensteanbieter. Ein Anwendungsfall, bei dem die Erfindung vorteilhaft eingesetzt werden kann, kommt vor, falls die üblicherweise gewählte Kommunikationsart bzw. der üblicherweise gewählte Diensteanbieter nicht bei länger andauernden Verbindungen die günstigeren Bedingungen anbieten. Wenn in diesem Fall ein Teilnehmer bei Kommunikationsvorgängen zu einem bestimmten Kommunikationspartner mehrmals in Folge die oben genannten bestimmte Verbindungsdauer überschreitet, wird erfindungsgemäß in diesem Verhalten eine Regelmäßigkeit festgestellt und auf die für länger dauernde Kommunikationsvorgänge günstigere Kommunikationsart bzw. den günstigeren Diensteanbieter hingewiesen.

In diesem Fall sind die eine Regelmäßigkeit liefernden Kommunikationsparameter mindestens eine Rufnummer oder eine Netzadresse des Kommunikationspartners und die Dauer einzelner Kommunikationsvorgänge. Weitere Kommunikationsparameter können beispielsweise die Uhrzeit einzelner Kommunikationsvorgänge und deren Zuordnung zu bestimmten Tageszeiträumen oder mehrere unterschiedliche Rufnummern/Netzadressen desselben Kommunikationspartners und deren Zuordnung zu diesem Kommunikationspartner mit Hilfe eines Kommunikationspartner-Verzeichnismoduls sein. Im letztgenannten Fall hat die Kommunikationsagenteneinheit auch Zugriffsmöglichkeit auf dieses Kommunikationspartner-Verzeichnismodul.

Das Gebührenberechnungsmodul, auf das eine erfindungsgemäße Kommunikationsagenteneinheit zugreift, berücksichtigt für den Fall, daß die Kommunikationsagenteneinheit den günstigsten Diensteanbieter auswählt, beim Berechnen von Gebühren die Gebührensätze unterschiedlicher Diensteanbieter.

Ebenso berücksichtigt das Gebührenberechnungsmodul, falls die Kommunikationsagenteneinheit zum Auswählen der günstigsten Kommunikationsart vorgesehen ist, beim Berechnen von Gebühren die Gebührenformeln für unterschiedliche Kommunikationsarten.

In einer günstigen Ausgestaltungsform einer Kommunikationsagenteneinheit bezieht die Prozessorsteuerung beim Beobachten des Kommunikationsverhaltens des Teilnehmers nicht nur die gewählte Endgeräteadresse eines Kommunikationspartners ein, sondern überprüft auch mit Hilfe eines Zugriffs auf ein Kommunikationspartner-Verzeichnismodul, ob unterschiedliche Endgeräteadressen demselben Kommunikationspartner zuzuordnen sind.

Günstigere Kommunikationsbedingungen können beispielsweise neben den bereits erwähnten geringeren Kommunikationskosten auch das Erreichen einer besseren Übertragungsqualität sein. So kann beispielsweise, insbesondere bei Kurzstreckenverbindungen, eine über ein ISDN-Netz geführte Verbindung trotz höherer Übertragungsqualität gleichhohe oder nur geringfügig höhere Gebühren verursachen als eine gleichlang aufrechterhaltene Verbindung über ein Internetprotokollnetz mit geringerer Übertragungsqualität.

Nachstehend wird die Erfindung anhand von Ausgestaltungsformen erfindungsgemäßer Kommunikationsagenteneinheiten unter Bezugnahme auf die Figuren näher erläutert.

Es zeigt
- Figur 1: eine Ausgestaltungsform einer Kommunikationsagenteneinheit in schematischer Blockdarstellung;
- Figur 2: in schematischer Blockdarstellung eine erste Art einer Kommunikationsagenteneinheit, mit einem rufenden Endgerät und einem Netz; und
- Figur 3: in schematischer Blockdarstellung eine zweite Art einer Kommunikationsagenteneinheit, mit einem rufenden Endgerät und einem Netz.

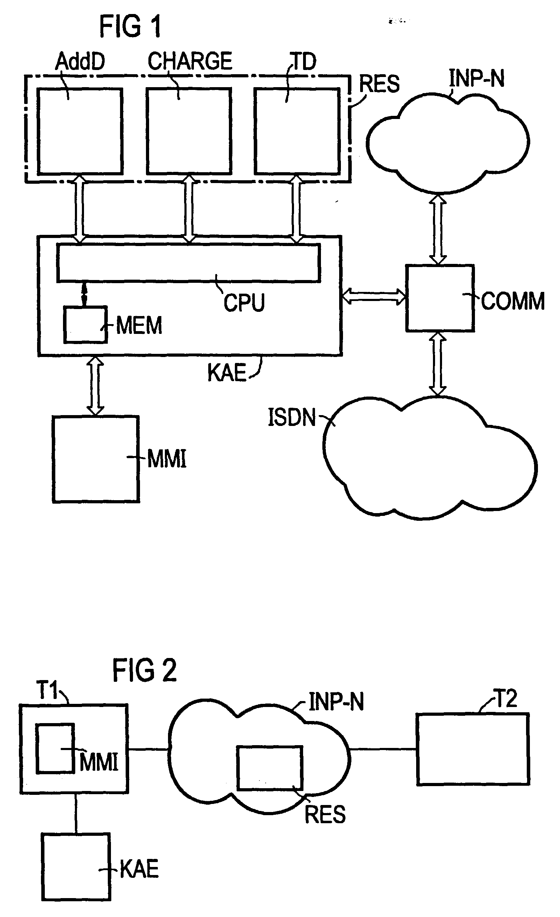

Figur 1 zeigt in schematischer Blockdarstellung eine Ausgestaltungsform einer erfindungsgemäßen Kommunikationsagenteneinheit KAE mit einer Prozessorsteuerung CPU und einem Speicher MEM. Die gezeigte Kommunikationsagenteneinheit KAE greift auf Informationsresourcen RES zu, zu denen unter anderem ein Kommunikationspartner-Verzeichnismodul AddD, ein Gebührenberechnungsmodul CHARGE und ein Uhrzeitmodul TD gehören. Außerdem greift die Kommunikationsagenteneinheit KAE auf eine Mensch-Maschine-Schnittstelle MMI zu. Diese Mensch-Maschine-Schnittstelle MMI kann beispielsweise ein Sprachausgabemodul mit Elektroakustikwandler oder ein Textausgabemodul mit einer Anzeigeeinrichtung sein (in der Figur nicht dargestellt). Der Speicher MEM dient der Prozessorsteuerung unter anderem zum Speichern von erfaßten Kommunikationsparametern, die zum Ermitteln ggf. vorliegender Regelmäßigkeiten im Kommunikationsverhalten benötigt werden oder zum Speichern von festgestellten Regelmäßigkeiten im Kommunikationsverhalten. Solche Kommunikationsparameter sind vorzugsweise in Form einer Datenbasis abgespeichert. Hierbei empfiehlt sich die Verwendung einer Datenbasis auf der Grundlage eines persönlichen, spezifischen Kommunikationspartner-Verzeichnisses.

Die in Figur 1 dargestellte Kommunikationsagenteneinheit KAE hat außerdem Zugriff auf ein Kommunikationsmodul COMM, das dem Teilnehmer, dem auch die Kommunikationsagenteneinheit KAE zugeordnet ist, beispielsweise mit Hilfe eines Kommunikationsendgeräts zuzuordnen ist. Dieses Kommunikationsmodul COMM ist im dargestellten Beispiel an ein Datennetz LAN und außerdem an ein ISDN-Kommunikationsnetz anschließbar.

Die in Figur 1 gezeigte Kommunikationsagenteneinheit KAE ist, wie erwähnt, einem Teilnehmer zugeordnet, zu dem auch das Kommunikationsmodul COMM gehört. Das Kommunikationsmodul COMM ist in diesem Beispiel als eine Netzübergangseinheit ausgeführt, beispielsweise als ein Modem oder eine Netzzugangskarte eines in Figur 1 nicht dargestellten Kommunikationsendgerätes. Durch den Zugriff auf das Kommunikationsmodul COMM kann die Prozessorsteuerung CPU der Kommunikationsagenteneinheit KAE das Kommunikationsverhalten des Teilnehmers beobachten und Kommunikationsparameter von Kommunikationsvorgängen dieses Teilnehmers erfassen und auswerten. Durch den Zugriff auf die Informationsresourcen RES kann die Prozessorsteuerung CPU anhand der erfaßten Kommunikationsparameter einzelner Kommunikationsvorgänge des Teilnehmers die Kommunikationsbedingungen je Kommunikationsvorgang ermitteln.

Mit Hilfe des Kommunikationsmoduls COMM, des Gebührenberechnungsmoduls CHARGE und des Uhrzeitmoduls TD ermittelt die Prozessorsteuerung CPU der Kommunikationsagenteneinheit KAE, ob Regelmäßigkeiten bei durch das Kommunikationsverhalten des Teilnehmers festgelegten gebührenrelevanten Kommunikationsparametern vorhanden sind. Die Prozessorsteuerung CPU wählt abhängig von gebührenrelevanten Kommunikationsparametern, die zu einem früheren Zeitpunkt als regelmäßig auftretend erfaßt und die durch das Kommunikationsverhalten des Teilnehmers festgelegt worden sind, die erwartungsgemäß günstigste Kommunikationsart und/oder den erwartungsgemäß günstigsten Diensteanbieter aus. Die Prozessorsteuerung geht dabei von der Annahme aus, daß das regelmäßige Kommunikationsverhalten auch beim aktuellen Kommunikationsereignis beibehalten wird.

Zu den von der Prozessorsteuerung CPU wählbaren Kommunikationsarten kann beispielsweise Telefonie über INP-N-Datennetze, wie z.B. LAN, Telefonie über digitale ISDN-Kommunikationsnetze oder, in der Figur 1 nicht dargestellt, Telefonie über ein Mobilfunknetz gehören.

Eine ausgewählte Kommunikationsart wird von der Prozessorsteuerung CPU der Kommunikationsagenteneinheit KAE dem Kommunikationsmodul COMM mitgeteilt, das dann einen entsprechenden Verbindungsaufbau gemäß der ausgewählten Kommunikationsart über das zugehörige Kommunikationsnetz veranlaßt.

Wenn die Kommunikationsagenteneinheit KAE andererseits den erwartungsgemäß günstigsten Diensteanbieter ausgewählt hat, übermittelt die Prozessorsteuerung CPU die diesem Diensteanbieter zugeordnete Information an das Kommunikationsmodul COMM. Das Kommunikationsmodul COMM veranlaßt daraufhin einen Verbindungsaufbau unter Verwendung einer dem ausgewählten Diensteanbieter zugeordneten Zugangsadresse.

Figur 2 zeigt in einer schematischen Blockdarstellung eine erste Realisierungsart der Kommunikationsagenteneinheit KAE nach Figur 1. Die dargestellte Kommunikationsagenteneinheit KAE1 ist hierbei einem rufenden Endgerät T1 und somit einem Teilnehmer unmittelbar körperlich zugeordnet und über dieses Endgerät T1 an ein Internet-Protokoll-Netz INP-N angeschlossen. In dem Internet-Protokoll-Netz INP-N werden Informationsresourcen RES bereitgestellt, auf die die Kommunikationsagenteneinheit KAE1 zugreifen kann. Die Mensch-Maschine-Schnittstelle MMI zum Ausgeben von Mitteilungen von der Kommunikationsagenteneinheit KAE1 an den Teilnehmer ist in dem Endgerät T1 enthalten.

In Figur 2 ist nur eine Verbindung vom Endgerät T1 zu dem Internet-Protokoll-Netz INP-N dargestellt. Selbstverständlich können aber auch noch Verbindungsmöglichkeiten beispielsweise zu Telefon-Netzen oder Mobilfunknetzen bestehen.

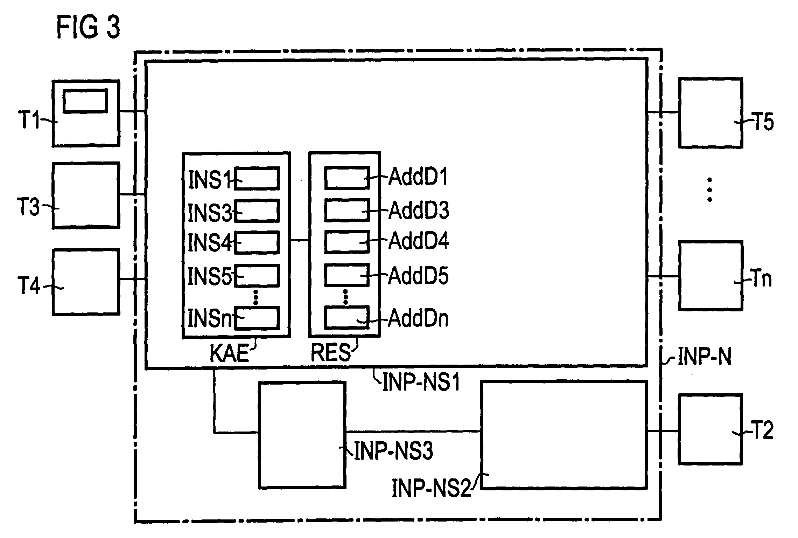

Figur 3 zeigt in einer Blockdarstellung eine zweite Realisierungsart der Kommunikationsagenteneinheit KAE. Die dargestellte Kommunikationsagenteneinheit KAE2 ist mehreren an einein Internet-Protokoll-Subnetz INP-NS1 angeschlossen Endgeräten T1, T3, T4, T5, Tn örtlich zugeordnet. Wenn die Kommunikationsagenteneinheit KAE2 für ein Endgerät T1, T3, T4, T5, Tn aktiviert wird, instanziiert sie für dieses Endgerät T1, T3, T4, T5, Tn jeweils eine Steuerung INS1, INS3, INS4, INS5, INSn, die dem jeweiligen Endgerät T1, T3, T4, T5, Tn und somit seinem Teilnehmer fest zugeordnet ist. In dem InternetProtokoll-Subnetz INP-NS1 werden Verbindungsabläufe von einer Netzsteuerung NC gesteuert. Informationsresourcen RES, auf die die Kommunikationsagenteneinheit KAE2 zugreifen kann, werden in dem Internet-Protokoll-Subnetz INP-NS1 bereitgestellt. Zu diesen Informationsresourcen RES gehören in dem gezeigten Ausführungsbeispiel für jeden Teilnehmer, dem die Kommunikationsagenteneinheit KAE2 zugeordnet werden kann, ein Kommunikationspartner-Verzeichnismodul AddD1, AddD3, AddD4, AddD5, AddDn mit spezifischen Daten von Kommunikationspartnern (Adressen, Kommunikationsparameter). Das Internet-Protokoll-Subnetz INP-NS1 bildet gemeinsam mit weiteren Internet-Protokoll-Subnetzen INP-NS2, INP-NS3 ein InternetProtokoll-Netz INP-N mit weiteren anschließbaren Endgeräten T2.

## Patentansprüche

1. Kommunikationsagenteneinheit (KAE, KAE1, KAE2) mit Zugriffsmöglichkeit auf ein Gebührenberechnungsmodul (CHARGE) und auf ein Uhrzeitmodul (TD), wobei die Kommunikationsagenteneinheit (KAE, KAE1, KAE2) eine Prozessorsteuerung (CPU) hat,
die das Kommunikationsverhalten eines Teilnehmers, dem die Kommunikationsagenteneinheit (KAE, KAE1, KAE2) zugeordnet ist, beobachtet und Regelmäßigkeiten durch Vergleichen von von der Kommunikationsagenteneinheit (KAE, KAE1, KAE2) erfaßbaren, zu verschiedenen Zeitpunkten beobachteten Kommunikationsparametern dieses Teilnehmers erfaßt,
wobei die Prozessorsteuerung (CPU) ermittelt, ob Regelmäßigkeiten bei durch das Kommunikationsverhalten des Teilnehmers festgelegten gebührenrelevanten Kommunikationsparametern festgestellt worden sind,
und wobei die Prozessorsteuerung (CPU) bei einem aktuellen Kommunikationsereignis unter mehreren Diensteanbietern den günstigsten Diensteanbieter abhängig von den zu einem früheren Zeitpunkt erfaßten gebührenrelevanten Kommunikationsparametern auswählt, wobei weiterhin angenommen ist, daß das regelmäßige Kommunikationsverhalten auch beim aktuellen Kommunikationsereignis beibehalten wird.

2. Kommunikationsagenteneinheit (KAE, KAE1, KAE2) mit Zugriffsmöglichkeit auf ein Gebührenberechnungsmodul (CHARGE) und auf ein Uhrzeitmodul (TD), wobei die Kommunikationsagenteneinheit (KAE, KAE1, KAE2) eine Prozessorsteuerung (CPU) hat,
die das Kommunikationsverhalten eines Teilnehmers, dem die Kommunikationsagenteneinheit (KAE, KAE1, KAE2) zugeordnet ist, beobachtet und Regelmäßigkeiten durch Vergleichen von von der Kommunikationsagenteneinheit (KAE, KAE1, KAE2) erfaßbaren, zu verschiedenen Zeitpunkten beobachteten Kommunikationsparametern dieses Teilnehmers erfaßt,
wobei die Prozessorsteuerung (CPU) ermittelt, ob Regelmäßigkeiten bei durch das Kommunikationsverhalten des Teilnehmers festgelegten gebührenrelevanten Kommunikationsparametern festgestellt worden sind,
und wobei die Prozessorsteuerung (CPU) bei einem aktuellen Kommunikationsereignis unter mehreren Kommunikationsarten die günstigste Kommunikationsart abhängig von den zu einem früheren Zeitpunkt erfaßten gebührenrelevanten Kommunikationsparametern auswählt, wobei weiterhin angenommen ist, daß das regelmäßige Kommunikationsverhalten auch beim aktuellen Kommunikationsereignis beibehalten wird.

3. Kommunikationsagenteneinheit (KAE, KAE1, KAE2) nach Anspruch 1 oder 2, gekennzeichnet durch eine Zugriffsmöglichkeit auf ein Kalendermodul (TD).

4. Kommunikationsagenteneinheit (KAE, KAE1, KAE2) nach Anspruch 1, 2 oder 3, gekennzeichnet durch eine Zugriffsmöglichkeit auf ein Kommunikationspartner-Verzeichnismodul (AddD)

5. Kommunikationsagenteneinheit (KAE, KAE1, KAE2) nach einem der vorhergehenden Ansprüche, dadurch gekennzeichnet, daß zu den von der Kommunikationsagenteneinheit (KAE, KAE1, KAE2) erfaßbaren Kommunikationsparametern mindestens ein Teil der Adresse eines gerufenen Teilnehmers gehört.

6. Kommunikationsagenteneinheit (KAE, KAE1, KAE2) nach einem der vorhergehenden Ansprüche, dadurch gekennzeichnet, daß zu den von der Kommunikationsagenteneinheit (KAE, KAE1, KAE2) erfaßbaren Kommunikationsparametern die Dauer eines abgehenden Rufes gehört.

7. Kommunikationsagenteneinheit (KAE, KAE1, KAE2) nach einem der vorhergehenden Ansprüche, dadurch gekennzeichnet, daß zu den von der Kommunikationsagenteneinheit (KAE, KAE1, KAE2) erfaßbaren Kommunikationsparametern der Zeitpunkt des Beginns eines abgehenden Rufs gehört.

8. Kommunikationsagenteneinheit (KAE, KAE1, KAE2) nach einem der vorhergehenden Ansprüche, dadurch gekennzeichnet, daß zu den von der Kommunikationsagenteneinheit (KAE, KAE1, KAE2) erfaßbaren Kommunikationsparametern die vom zugeordneten Teilnehmer gewählte Diensteart gehört.

9. Kommunikationsagenteneinheit (KAE, KAE1, KAE2) nach einem der vorhergehenden Ansprüche, dadurch gekennzeichnet, daß das Gebührenberechnungsmodul (CHARGE) Gebühren unter Berücksichtigung unterschiedlicher Diensteanbieter und deren Gebühren berechnet.

10. Kommunikationsagenteneinheit (KAE, KAE1, KAE2) nach einem der vorhergehenden Ansprüche, dadurch gekennzeichnet, daß das Gebührenberechnungsmodul (CHARGE) Gebühren unter Berücksichtigung verschiedener Kommunikationsarten berechnet.
